(19) Europäisches Patentamt
European Patent Office
Office européen des brevets

(11) EP 2 904 903 B1

(12) **EUROPEAN PATENT SPECIFICATION**

(45) Date of publication and mention
of the grant of the patent:
**15.05.2019 Bulletin 2019/20**

(51) Int Cl.:
*A01N 59/02* *(2006.01)*   *A01N 59/20* *(2006.01)*
*A01P 3/00* *(2006.01)*   *A01N 25/04* *(2006.01)*

(21) Application number: **15152450.1**

(22) Date of filing: **26.01.2015**

(54) **Combinations of Sulfur and a Multi-Site Contact Fungicide**

Kombinationen von Schwefel und einem Multi-Site Kontaktfungizid

Combinaisons de soufre et d'un fongicide multisite de contact

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2014 IN KO01452014**

(43) Date of publication of application:
**12.08.2015 Bulletin 2015/33**

(73) Proprietor: **UPL Limited
Haldia, West Bengal 721 602 (IN)**

(72) Inventors:
• **Bergamaschi, Andrea
400 052 Mumbai, State of Maharashtra (IN)**
• **Shroff, Jaidev, Rajnikant
400 052 Mumbai, State of Maharashtra (IN)**
• **Shroff, Vikram, Rajnikan
400 052 Mumbai, State of Maharashtra (IN)**

(74) Representative: **Pons
Glorieta Ruben Dario 4
28010 Madrid (ES)**

(56) References cited:
**EP-A2- 2 695 519**   **WO-A1-2014/009935**
**WO-A2-2012/053894**   **US-A1- 2013 309 327**

• **Bob Emmett ET AL: "Sulphur formulations,
particle size and activity - a review", Strategic Use
of Sulphur in Integrated Pest and Disease
Management (IPM) Programs for Grapevines, 1
December 2003 (2003-12-01), pages 52-57,
XP055400456, AUSTRALIA Retrieved from the
Internet:
URL:http://research.wineaustralia.com/wp-c
ontent/uploads/2012/09/DAV-98-1.pdf [retrieved
on 2017-08-22]**

**Description**

**Field of the invention:**

The present invention relates to a combination comprising a suspension concentrate of sulfur and a multi-site contact fungicide.

**Background and Prior art:**

The challenge involved in developing commercially acceptable products containing agriculturally active compounds in combination continues to increase due to the rapid emergence of more complex customer and regulatory requirements. These agricultural compositions must exhibit excellent chemical stability and must also maintain a high level of physical stability under a severe range of storage and use conditions especially when used in combination.

Sulfur is the chemical element with atomic number 16. In the periodic table, it is represented by the symbol S. It is an abundant, multivalent non-metal. Under normal conditions, sulfur atoms form cyclic octatomic molecules with chemical formula Ss. At room temperature elemental sulfur is a bright yellow crystalline solid. Chemically, sulfur can react as either an oxidizing or reducing agent. It oxidizes most metals and several nonmetals, including carbon, which leads to its negative charge in most organosulfur compounds, but it reduces several strong oxidants, such as oxygen and fluorine. It is also the lightest element to easily produce stable exceptions to the octet rule.

Sulfur is one of the oldest pesticides known, also widely used today as a pesticide for the control of powdery mildews, rusts, leaf blights and fruit rots (Agrios, G. N., Plant Pathology, 4th edition, p. 208). Sulfur disrupts the metabolic processes of fungi and protects plants from diseases by inhibiting spore germination (Ellis, B. W. and F. Marshall Bradley, eds., Natural Insect and Disease Control, p. 369). Sulfur is also sometimes used as a miticide. For example, Kumulus D F, a water dispersible granular fungicide, is an approved pesticide for use against rust mites. Traditionally some plant diseases were controlled with applications of elemental sulfur, but this necessitates frequent, high volume applications of an irritating material. Sulfur causes plant injury in hot and dry weather conditions.

However, sulfur is difficult to formulate into a formulation either alone or in combination. Problems associated with sulfur formulations include formation of unsightly residue on ornamentals and the tendency of sulfur to settle down when in liquid form (Olkowski, W. et al, Common Sense Pest Control, p. 109). Some plants are sensitive to sulfur and plant damage can occur when temperatures during application are greater than 30°C.

US Patent No. 6835719 discloses pesticidal liquid suspension composition including a mixture of sulfur combined with pyrethrins and/or pyrethroids. The composition can be prepared as concentrated or ready-to-use formulations. However, this does not disclose sulfur in liquid suspension and hence does not eliminate phytotoxicity due to unwanted residue formation. Presence of high amount of sulfur in a formulation imparts instability hence amount of sulfur in a formulation is reduced.

It is apparent from the above that combinations of granular sulfur are known in the art and problems in formulating stable composition of granular sulfur and a second pesticide individually is also known in the art. Several drawbacks are associated with the known formulation of granular sulfur such as high sulfur toxicity, residue formation, instability and difficulty to employ in the field and increase in phytotoxicity. Particulate sulfur also settles down in liquid formulation and hence requires a suspension system to be suspended in liquid. As a result, commercial sulfur labels contain cautions against mixing sulfur with oil and carry warnings such as: "do not use within 30 days of an oil spray and do not mix with oil." (US6835719 Parker Diana L et.al). Thus, there is a need in the art for a formulation comprising sulfur that eliminates the need to use a mineral oil.

In our co-pending application EP2695519 A2, filed August 10, 2012, described is a formulation comprising mineral oil; suspension concentrate comprising particulate sulfur suspended in an aqueous medium, wherein said particulate sulfur has a particle size diameter distribution of $D_{90}$ less than about 10 microns; at least another pesticide selected from the fungicides thiram, ziram and mancozeb; and at least one thickener.

US 2013/309327 A1 discloses a pesticidal composition comprising sulphur, a fungicide selected from the group consisting of cymoxanil, fenhexamid, fenamidone, cyazofamid, chlorothalonil, kresoxim methyl, azoxystrobin, trifloxystrobin, pyraclostrobin, iprodione, validamycin, kasugamycin, cyprodinil, pencycuron, hexaconazole, prochloraz, epoxiconazole, prothioconaozole, trifloxystrobin, thiophanate methyl, spiroxamine, metrafenone or their salts thereof and at least one agrochemically acceptable excipient. However, the disclosure can only be considered to indicate a preference for sulphur particles within the range 1 to 10 microns. Consequently, this disclosure fails to provide any suggestion or teaching that maintaining sulphur particle sizes is of any importance or significance.

WO 2012/053894 A2 relates to an aqueous suspension comprising elemental biosulfur and at least one surfactant. The invention further relates to the use of the aqueous suspension as a fertilizer, fungicide and/or insecticide, and to a method for protecting an agricultural plant from a plant disease by applying the aqueous composition to an agricultural plant. This disclosure is focused solely on one particular type of sulphur, that is, biosulphur and draws clear distinctions between biosulphur and conventionally derived "chemically produced" sulphur. Furthermore, a skilled person would understand that on reading this disclosure that its teaching is specific to biosulphur and cannot be generalized to encompass any sulphur composition.

Bob Emmett et al.: Sulphur formulations, particle size and activity - a review, Strategic Use of Sulphur in integrated pest and disease management (IPM) programs for grapevines, December 2003, pages 52 - 57 discloses, on page 7, that the degradation of sulphur on plant surfaces is related to temperature and particle size, and that rainfastness is mostly related to particle size. However, this reference only discloses the sulphur particle size and its effects on rainfastness on sulphur itself, but not on the other multisite contact fungicides present in a coformulation with sulphur."

There is a need in the art to develop a stable formulation of sulfur that overcomes the above drawbacks of the known formulations and yet has a superior efficacy.

**Object of the invention:**

It is an object of the present invention to provide an eco-friendly suspension concentrate of sulfur in combination with a second pesticide wherein the resultant combination displays higher rainfastness and has low phytotoxicity.

Another object of the present invention is to provide a suspension concentrate of sulfur in combination with a second pesticide wherein the formulation exhibits a synergistic protective and/or curative effect.

Another object of the present invention is to provide a suspension concentrate of sulfur in combination with a second pesticide wherein the sulfur content surprisingly improves the rainfastness of the second pesticide.

Yet another object of the present invention is to provide a suspension concentrate of sulfur in combination with a second pesticide wherein the combination displays synergistic efficacy that is greater than the efficacy of the individual components.

Yet another object of the present invention is to provide a process for the preparation of an eco-friendly stable combination of a suspension concentrate of sulfur in combination with a second fungicide.

**Summary of the invention:**

A suspension concentrate comprising particulate sulfur suspended in an aqueous medium, said aqueous medium additionally comprising at least one surfactant wherein:

said particulate sulfur has the particle size distribution $D_{99}$ of 1.2 microns; and at least a multisite contact fungicide, and the multisite contact fungicide is a copper fungicide selected from copper oxychloride, copper sulfate, copper hydroxide and tribasic copper sulfate.

In another aspect, the present invention provides a composition comprising:

a) a suspension concentrate comprising particulate sulfur suspended in an aqueous medium, said aqueous medium additionally comprising at least one surfactant; wherein said particulate sulfur has a particle size distribution $D_{99}$ of 1.2 microns; and

b) at least a multisite contact fungicide, said multisite contact fungicide being a copper fungicide selected from copper oxychloride, copper sulfate, copper hydroxide and tribasic copper sulfate.

In yet another aspect, the present invention provides a process for the preparation of a composition comprising the steps of:

a) mixing a predetermined quantity of water and at least one surfactant followed by adding (a) an effective amount of a multi-site contact fungicide; (b) a suspension concentrate comprising particulate sulfur suspended in an aqueous medium, said aqueous medium additionally comprising at least one surfactant;

b) mixing a second quantity of water and at least one thickener in another vessel and obtaining a thickener premix;

c) mixing thickener premix of step (b) with mixture of step (a); and

d) filtering the mixture of step (c).

In another aspect the present invention provides a method of treating a locus, said method comprising subjecting the locus to a treatment with a composition comprising:

c) a suspension concentrate comprising particulate sulfur suspended in an aqueous medium, said aqueous medium additionally comprising at least one surfactant; wherein said particulate sulfur has a particle size distribution $D_{99}$ of 1.2 microns; and

d) at least a multisite contact fungicide, said multisite contact fungicide being a copper fungicide selected from copper oxychloride, copper sulfate, copper hydroxide and tribasic copper sulfate.

**Detailed Description of the invention:**

Surprisingly, the present inventors have found that a suspension concentrate of particulate sulfur having a particle size diameter distribution of $D_{90}$ between about 1 to 3 microns demonstrates a significantly increased rainfastness and reduced phytotoxicity to the leaf surfaces. Still more surprisingly, it has been found that such a suspension concentrate having a particle size diameter distribution of $D_{90}$ between about 1 to 3 microns, either alone or in combination with a second multi-site contact fungicide, demonstrates significantly improved efficacy against fungal infestations.

The particle size distribution of the particulate sulfur component of the present invention has $D_{99}$ of 1.2 microns.

It has been surprisingly found that a suspension concentrate comprising particulate sulfur having a predetermined particle size in combination with a multi-site contact fungicide significantly synergizes the efficacy of the contact fungicide. This synergistic complementation was not seen when either the contact fungicide or the particulate sulfur suspension concentrate were individually used in isolation, but was observed only when the two components were used in conjunction.

The term "predetermined particle size" used herein in relation to the particle size distribution of the particulate sulfur present in the suspension concentrate shall be interpreted to denote a particle size distribution between 1 to 6 microns, preferably having a particle size diameter distribution of $D_{90}$ between about 1 to 3 microns, and more preferably having a particle size diameter distribution $D_{99}$ about 1.2 microns.

The multi-site contact fungicides of the present invention inhibit fungal growth through multiple sites of action and have contact and preventive activity. The multi-site contact fungicide are copper fungicides selected from copper oxychloride, copper sulfate, copper hydroxide and tribasic copper sulfate (Bordeaux mixture).

In an embodiment, these combinations were also found especially effective against powdery mildew, apple scab and cercosporiosis family of fungi.

In an embodiment, the multi-site contact fungicide may be applied in an effective amount so as to act as a synergist to the particulate sulfur component of the compositions of the present invention. However, the appropriate amounts of the fungicides used in the present invention, whether multi-site contact fungicides or the particulate sulfur component, is not particularly limiting and may be conveniently chosen by a skilled artisan.

The method of control of the present invention may be carried out by spraying the suggested tank mixes, or the individual fungicides may be formulated as a kit-of-parts containing various components that may be mixed as instructed prior to spraying.

Disclosed is a process for preparation of suspension concentrate of sulfur, said process comprising:

a) mixing a predetermined quantity of water and at least one surfactant with raw sulfur;
b) grinding the mixture of step (a) and filtering through mesh of a predetermined size to obtain particulate sulfur having a predetermined particle size;
c) mixing a second quantity of water and at least one thickener in another vessel and obtaining a thickener premix;
d) mixing the thickener premix of step (c) and ground sulfur of step (b) in another vessel; and
e) filtering the mixture of step (d) through mesh of 100 μm.

The predetermined quantity and the second quantity of water are not particularly limiting and may be selected by a skilled artisan on the basis of the quantities of remaining ingredients.

The surfactant may be selected from nonionic surfactants such as alcohol ethoxylates for example of $C_9$ to $C_{15}$, particularly primary alcohols, which may be linear or branched, particularly mono-branched, ethoxylates with from 5 to 30 moles of ethylene oxide; and alkoxylates of such alcohols particularly mixed ethoxylate/propoxylates which may be block or random mixed alkoxylates, typically containing from 3 to 10 ethylene oxide residues and from 1 to 5 propylene oxide residues, particularly where the polyalkoxylate chain is terminated with propylene oxide unit(s); polyoxyethylene/polyoxypropylene copolymers, particularly block copolymers, such as the Synperonic PE series of copolymers and Atlas G 5000 available from Uniqema, and alkyl polysaccharides; anionic surfactants e.g. isethionates, such as sodium cocoyl isethionate, naphthalene sulphonic acids or sulphosuccinates in an amount of about 0.1% to 5%.

In another embodiment, the particulate sulfur component of the compositions of the present invention comprises an anti-foaming agent. The anti-foaming agent included within the compositions of the present invention may be selected from but are not limited to stearates; silicones; dimethyl polysiloxanes and ethoxylates. Preferably, the anti-foaming agent is dimethyl polysiloxanes or a silicone based defoamer. In an embodiment, the anti-foaming agent may be present within the compositions according to the present invention in an amount of about 0.1% to about 5% by total weight of the formulation.

The compositions according to an embodiment of the present invention preferably include at least one thickener.

The thickener according to the present invention may be selected from a heteropolysaccharide or a synthetic or natural gum. The gum may preferably be in the form of a gel of predetermined strengths such as 2 percent. The thickener may be present in an amount of about 0.1 % to about 5% by total weight of the formulation.

Preferably, the compositions of the present invention further include a biocide, which may be a mixture comprising dipropylene glycol, 1, 2-bezisothiazolin-3-one or sodium hydroxide and water. However, it should be understood that the present invention is not limited to these specific biocides and other biocides that are known in the art may also be conveniently used. The biocide may be present within the compositions according to the present invention in an amount of about 0.1 to about 0.5% by total weight of the formulation. The compositions of the present invention also includes solvent such as distilled water.

Sulfur is known to be quite difficult to grind and to get the desired particle size. The speed of the flow through the ceramic bead mills is adjusted to obtain the desired particle size. The process is cooled at each step of the grinding (50°C max.). There is no particular problem with the mixture of suspension concentrate and oil (stirrers at 1500 and 3000 revolutions a minute). However the sulfur in particulate form in liquid system forms residue or settles down.

The compositions of the present invention may be conveniently prepared in concentrated form or in a ready-to-use form.

The composition of the present invention may be applied in areas that are infected with fungal infestations, garden areas, and on or around trees, plants, and shrubs. The composition of the present invention is eco-friendly composition having low phytotoxicity and thus may be applied to a variety of plants, flowers, trees, shrubs, and grasses.

Thus, in this embodiment, the present invention describes a method of treating a locus, said method comprising subjecting the locus to a treatment with a composition comprising (a) a suspension concentrate comprising particulate sulfur, wherein the particulate sulfur has a particle size distribution D99 of 1.2 microns, suspended in an aqueous medium, said aqueous medium additionally comprising at least one surfactant; and (b) at least one multi-site contact fungicide, the multisite contact fungicide being a copper fungicide, selected from copper oxychloride, copper sulfate, copper hydroxide and tribasic copper sulfate.

**Examples**

**Comparative Example 1:**

Table 1

| Sr. No. | Ingredients | %(w/w) |
|---------|-------------|--------|
| 1. | Mancozeb | 41.7% |
| 2. | Sulfur | 9.9% |
| 3. | Fatty alcohol ethoxylate | 5.0% |
| 4. | Water | Up to 100% $\leq$ 43.43% |

**Process:**

Water and a part of the given quantity of fatty alcohol ethoxylate were mixed with raw sulfur. The mixture was ground and filtered through mesh of a predetermined size to obtain particulate sulfur having the predetermined particle size defined above. Water and Fatty alcohol ethoxylate were mixed followed by addition of the suspension concentrate of particulate sulfur suspended in an aqueous medium in the presence of fatty alcohol ethoxylate. The defined amount of mancozeb was added to the mixture under constant mixing to obtain a stable composition.

**Comparative Example 2:**

The process described in example 1 was utilized to prepare compositions having different particle sizes, one according to the predetermined particle size of the present invention and the other having conventionally known particle sizes, available commercially as Heliosoufre. The particle size distribution in the two prepared compositions was measured using the laser detection method. The following particle size distribution was noted.

| S No. | Composition | PSD ≤ 1.2 μ (%) | PSD ≤ 2.6 μ (%) | PSD ≤ 6.0 μ (%) |
|---|---|---|---|---|
| 1 | Composition according to the present invention | 94.6 | 5.4 | 0.0 |
| 2 | Comparative composition (Heliosoufre) | 40.3 | 39.9 | 19.8 |

Rainfastness

The two compositions were subjected to rainfastness test under an artificial rain test of 30 mm. The amount of sulfur remaining on the test leaves after artificial rainfall compared to the amount of sulfur in the applied composition was used to measure the percentage rainfastness. The compositions were additionally compared for rainfastness vis-à-vis the conventionally available sulfur compositions. The following results were noted:

| S No. | Composition | Percentage rainfastness (% remaining sulfur) |
|---|---|---|
| 1 | Composition according to the invention | 60.8 |
| 2 | Comparative composition (Heliosoufre) | 37.4 |
| 3 | Microthiol | 13.4 |
| 4 | Thiovit | 5.4 |

Thus, it was concluded that the compositions of the present invention having the predetermined particle size displayed significantly enhanced rainfastness than the comparative formulations and against the conventionally available compositions Microthiol and Thiovit respectively.

Efficacy

The two compositions prepared above were tested for their efficacy against powdery mildew in a vineyard. The spray interval for the compositions of the present invention was maintained at 10-12 days, in contrast to the conventionally used spray intervals of 6-8 days for the conventionally available sulfur wettable granules. The dosage of 800 mL/Ha for the compositions of the inventions and the conventional formulations was maintained. The following percentage efficacies were noted:

| S No. | Composition | Percentage efficacy against powdery mildew vineyard |
|---|---|---|
| 1 | Composition according to the invention | 73.74 |
| 2 | Comparative composition (Heliosoufre) | 57.37 |

It was found that at the same dosage rate, the compositions of the present invention, at 10-12 days spray intervals, displayed significantly better efficacy than the conventional formulation Heliosoufre against vineyard powdery mildew.

**Comparative Example 3:**

Experiments were conducted to evaluate the rainfastness of multi-site contact fungicides in the presence of the particulate sulfur suspension concentrate having the predetermined particle size of the present invention i.e. having a particle size diameter distribution $D_{99}$ about 1.2 microns. The particulate sulfur of the invention at 5 L/Ha was co-formulated with 20% neutralized copper sulfate formulation, available as Poltiglia Disperss at 2.5 kg/Ha. The composition was applied to an apple orchard and 7.5 mm/h artificial rain was simulated. The percentage copper remaining after washout (due to rain) from the copper sulfate component was noted when Politiglia Disperss was applied alone compared against the combination of the present invention. The following observations were noted:

| S No. | Composition applied | Percentage copper remaining after washout due to rain | |
|---|---|---|---|
| | | Amount of rain = 30 mm | Amount of rain = 60 mm |
| 1 | Poltiglia Disperss | 20 | 13 |
| 2 | Poltiglia Disperss + Sulfur suspension concentrate $D_{99}$ = 1.2 microns | 52 | 45 |

Thus, it was found that the sulfur suspension concentrate ($D_{99}$ = 1.2 microns) component of the invention significantly enhanced the rainfastness of the contact fungicide.

## Comparative Example 4:

Separate trials were conducted to evaluate the efficacy of sulfur suspension concentrate ($D_{99}$ = 1.2 microns) in combination with a contact fungicide. In each trial, sulfur suspension concentrate ($D_{99}$ = 1.2 microns) was applied alone, the contact fungicide chlorothalonil was applied alone and the combination of sulfur suspension concentrate ($D_{99}$ = 1.2 microns) with the contact fungicide were applied to foliar areas of sugar beet at standard doses. The percentage of foliar damage in each experiment was noted and the percentage control of fruit damage was noted. The efficacy of the combination was evaluated using the Limpel's formula, which states:

$$EE = X + Y - (XY/100)$$

where EE was the expected efficacy if the combination was additive;
X was the percent inhibition of growth by fungicide A at x grams of active ingredient per hectare (gai/ha);
Y was the percent inhibition of growth by fungicide B at y gai/h; and
E represents the expected percent inhibition of growth by fungicides A + B in combination at x + y gai/ha, respectively.

When the observed percent inhibition of growth by fungicides A + B is greater than E (expected), the combination is synergistic. If the observed inhibition is less than expected, the combination is antagonistic, and when observed and expected inhibitions are equal, the combination is additive.

On applying the Limpel's formula, it was found that the observed percentage control was greater than the expected percentage control when sulfur suspension concentrate ($D_{99}$ = 1.2 microns) was combined with chlorothalonil. The following table demonstrates the results observed:

| Sr. | Dose | | % Disease control | | | |
|---|---|---|---|---|---|---|
| | | | (Control = 19.592) | | (Control = 94.189) | |
| | Active | Rate Unit | Expected | Actual | Expected | Actual |
| 1 | Sulfur | 5L/ha | - | 11.01 | - | 13.980 |
| 2 | Chlorothalonil | 2L/ha | - | 73.85 | - | 56.316 |
| 3 | Chlorothalonil + Sulfur | 5L/ha | 76.73 | 86.24 | 64.423 | 73.625 |
| | E(O)/ E(E)= | | 1.123 | | 1.14 | |

The ratio of Observed to Actual was found to be greater than one indicating synergism between Sulfur of the present invention and chlorothalonil.

## Comparative Example 5:

Separate trials were conducted to evaluate the efficacy of sulfur suspension concentrate ($D_{99}$ = 1.2 microns) in combination with a contact fungicide. In each trial, sulfur suspension concentrate ($D_{99}$ = 1.2 microns) was applied alone, the contact fungicide Mancozeb was applied alone and the combination of sulfur suspension concentrate ($D_{99}$ = 1.2 microns) with the contact fungicide were applied to foliar areas of sugar beet at standard doses. The percentage of foliar damage in each experiment was noted and the percentage control of fruit damage was noted. The efficacy of the combination was evaluated using the Limpel's formula, which states:

$$EE = X + Y - (XY/100)$$

where EE was the expected efficacy if the combination was additive;
X was the percent inhibition of growth by fungicide A at x grams of active ingredient per hectare (gai/ha);
Y was the percent inhibition of growth by fungicide B at y gai/h; and
E represents the expected percent inhibition of growth by fungicides A + B in combination at x + y gai/ha, respectively.

When the observed percent inhibition of growth by fungicides A + B is greater than E (expected), the combination is synergistic. If the observed inhibition is less than expected, the combination is antagonistic, and when observed and expected inhibitions are equal, the combination is additive.

On applying the Limpel's formula, it was found that the observed percentage control was greater than the expected percentage control when sulfur suspension concentrate ($D_{99}$ = 1.2 microns) was combined with mancozeb. The following table demonstrates the results observed:

| Sr. | Dose | | % Disease control | |
| | | | (Control = 19.592) | |
| | Active | Rate Unit | Expected | Actual |
| 1 | Sulfur | 5L/ha | - | 58.44 |
| 2 | Mancozeb | 2.1 Kg/ha | - | 11.01 |
| 3 | Mancozeb+ Sulfur | 2.1Kg +5L/ha | 63.016 | 68.885 |
| | E(O)/ E(E)= | | 1.093 | |

The ratio of Observed to Actual was found to be greater than one indicating synergism between Sulfur of the present invention and Mancozeb.

## Comparative Example 6:

Separate trials were conducted to evaluate the yield improvement of sulfur suspension concentrate ($D_{99}$ = 1.2 microns) in combination with a contact fungicide. In each trial, sulfur suspension concentrate ($D_{99}$ = 1.2 microns) was applied alone, the contact fungicide Mancozeb was applied alone and the combination of sulfur suspension concentrate ($D_{99}$ = 1.2 microns) with the contact fungicide were applied to foliar areas of sugar beet at standard doses. The percentage of yield in each experiment was noted and the percentage control of fruit yield was noted. The efficacy of the combination was evaluated using the Limpel's formula, which states:

$$EE = X + Y - (XY/100)$$

where EE was the expected efficacy if the combination was additive;
X was the percent yield when fungicide A was applied at x grams of active ingredient per hectare (gai/ha);
Y was the percent yield when fungicide B was applied at y gai/h; and
E represents the expected percent yield when fungicides A + B in combination at x + y gai/ha, respectively.

When the observed percent yield by fungicides A + B is greater than E (expected), the combination is synergistic. If the observed yield is less than expected, the combination is antagonistic, and when observed and expected yields are equal, the combination is additive.

On applying the Limpel's formula, it was found that the observed percentage yield was greater than the expected percentage control when sulfur suspension concentrate ($D_{99}$ = 1.2 microns) was combined with mancozeb. The following table demonstrates the results observed:

| Sr. | Dose | | % Yield | |
| --- | --- | --- | --- | --- |
| | | | (Control =93.95) | |
| | Active | Rate Unit | Expected | Actual |
| 1 | Sulfur | 5L/ha | - | 104.73 |
| 2 | Mancozeb | 2.1 Kg/ha | - | 111.33 |
| 3 | Mancozeb+ Sulfur | 2.1Kg +5L/ha | 99.464091 | 117.83 |
| | E(O)/ E(E)= | | 1.18 | |

The ratio of Observed to Actual was found to be greater than one indicating synergism between Sulfur of the present invention and Mancozeb.

**Comparative Example 7:**

Separate trials were conducted to evaluate the yield improvement of sulfur suspension concentrate ($D_{99}$ = 1.2 microns) in combination with a contact fungicide. In each trial, sulfur suspension concentrate ($D_{99}$ = 1.2 microns) was applied alone, the contact fungicide Chlorothalonil was applied alone and the combination of sulfur suspension concentrate ($D_{99}$ = 1.2 microns) with the contact fungicide were applied to foliar areas of sugar beet at standard doses. The percentage of yield in each experiment was noted and the percentage control of fruit yeild was noted. The efficacy of the combination was evaluated using the Limpel's formula, which states:

$$EE = X + Y - (XY/100)$$

where EE was the expected efficacy if the combination was additive;
X was the percent yield when fungicide A was applied at x grams of active ingredient per hectare (gai/ha);
Y was the percent yield when fungicide B was applied at y gai/h; and
E represents the expected percent yield when fungicides A + B in combination at x + y gai/ha, respectively.

When the observed percent yield by fungicides A + B is greater than E (expected), the combination is synergistic. If the observed yield is less than expected, the combination is antagonistic, and when observed and expected yields are equal, the combination is additive.

On applying the Limpel's formula, it was found that the observed percentage yield was greater than the expected percentage yield when sulfur suspension concentrate ($D_{99}$ = 1.2 microns) was combined with chlorothalonil. The following table demonstrates the results observed:

| Sr. | Dose | | % Yield | |
| --- | --- | --- | --- | --- |
| | | | (Control =) | |
| | Active | Rate Unit | Expected | Actual |
| 1 | Sulfur | 5L/ha | - | 104.73 |
| 2 | Chlorothalonil | 2L/ha | - | 105.95 |
| 3 | Chlorothalonil + Sulfur | 5L/ha | 99.718 | 114 |
| | E(O)/ E(E)= | | 1.14 | |

The ratio of Observed to Actual was found to be greater than one indicating synergism between Sulfur of the present invention and Chlorothalonil.

Other than in the operating examples provided hereinbefore or where otherwise indicated, all numbers expressing quantities of ingredients or reaction conditions are to be understood as being modified in all instances by the term "about".

**Claims**

1. A suspension concentrate comprising particulate sulfur suspended in an aqueous medium, said aqueous medium additionally comprising at least one surfactant wherein:

   said particulate sulfur has the particle size distribution $D_{99}$ of 1.2 microns; and at least a multisite contact fungicide, and
   the multisite contact fungicide is a copper fungicide selected from copper oxychloride, copper sulfate, copper hydroxide and tribasic copper sulfate.

2. A process for the preparation of a composition comprising the steps of:

   a) mixing a predetermined quantity of water and at least one surfactant followed by adding (a) an effective amount of at least one copper fungicide selected from copper oxychloride, copper sulfate, copper hydroxide and tribasic copper sulfate; (b) a suspension concentrate comprising particulate sulfur suspended in an aqueous medium said particulate sulfur having the particle size distribution $D_{99}$ of 1.2 microns, said aqueous medium additionally comprising at least one surfactant;
   b) mixing a second quantity of water and at least one thickener in another vessel and obtaining a thickener premix;
   c) mixing thickener premix of step (b) with mixture of step (a); and
   d) filtering the mixture of step (c).

3. A method of treating a locus, said method comprising subjecting the locus to a treatment with a composition comprising:

   a) a suspension concentrate comprising particulate sulfur suspended in an aqueous medium, said aqueous medium additionally comprising at least one surfactant; wherein said particulate sulfur has a particle size distribution $D_{99}$ of 1.2 microns; and
   b) at least a multisite contact fungicide, said multisite contact fungicide being a copper fungicide selected from copper oxychloride, copper sulfate, copper hydroxide and tribasic copper sulfate.

**Patentansprüche**

1. Suspensionskonzentrat, umfassend partikulären Schwefel, der in einem wässrigen Medium suspendiert ist, wobei das wässrige Medium zusätzlich mindestens eine oberflächenaktive Substanz umfasst, wobei:

   der partikuläre Schwefel die Teilchengrößenverteilung $D_{99}$ von 1,2 Mikrometern aufweist; und mindestens ein Multi-Site Kontaktfungizid, und
   wobei das Multi-Site Kontaktfungizid ein Kupferfungizid ist, ausgewählt aus Kupferoxychlorid, Kupfersulfat, Kupferhydroxid und dreibasischem Kupfersulfat.

2. Verfahren zur Herstellung einer Zusammensetzung, umfassend die folgenden Schritte:

   a) Mischen einer vorbestimmten Menge Wasser und mindestens einer oberflächenaktiven Substanz, gefolgt durch das Zugeben (a) einer wirksamen Menge mindestens eines Kupferfungizids, ausgewählt aus Kupferoxychlorid, Kupfersulfat, Kupferhydroxid und dreibasischem Kupfersulfat; (b) eines Suspensionskonzentrats, umfassend partikulären Schwefel, der in einem wässrigen Medium suspendiert ist, wobei der partikuläre Schwefel eine Teilchengrößenverteilung $D_{99}$ von 1,2 Mikrometern aufweist, wobei das wässrige Medium zusätzlich mindestens eine oberflächenaktive Substanz umfasst;
   b) Mischen einer zweiten Menge Wasser und mindestens eines Verdickungsmittels in einem anderen Gefäß und Erhalten eines Verdickungsmittelvorgemisches;
   c) Mischen des Verdickungsmittelvorgemisches von Schritt (b) mit dem Gemisch von Schritt (a); und
   d) Filtrieren des Gemisches von Schritt (c).

3. Verfahren zur Behandlung eines Ortes, wobei das Verfahren das Unterziehen des Ortes einer Behandlung mit einer Zusammensetzung umfasst, umfassend:

   a) ein Suspensionskonzentrat, umfassend partikulären Schwefel, der in einem wässrigen Medium suspendiert ist, wobei das wässrige Medium zusätzlich mindestens eine oberflächenaktive Substanz umfasst; wobei der partikuläre Schwefel die Teilchengrößenverteilung $D_{99}$ von 1,2 Mikrometern aufweist; und
b) mindestens ein Multi-Site Kontaktfungizid, wobei das Multi-Site Kontaktfungizid ein Kupferfungizid ist, ausgewählt aus Kupferoxychlorid, Kupfersulfat, Kupferhydroxid und dreibasischem Kupfersulfat.

**Revendications**

1. Concentré de suspension comprenant du soufre particulaire suspendu dans un milieu aqueux, ledit milieu aqueux comprenant en outre au moins un tensioactif dans lequel :

   ledit soufre particulaire a la distribution de taille de particule $D_{99}$ de 1,2 microns ; et au moins un fongicide multisite de contact, et
   le fongicide multisite de contact est un fongicide à base de cuivre choisi parmi l'oxychlorure de cuivre, le sulfate de cuivre, l'hydroxyde de cuivre et le sulfate de cuivre tribasique.

2. Procédé de préparation d'une composition comprenant les étapes consistant à :

   a) mélanger une quantité prédéterminée d'eau et au moins un tensioactif suivi par l'ajout (a) d'une quantité efficace d'au moins un fongicide à base de cuivre choisi parmi l'oxychlorure de cuivre, le sulfate de cuivre, l'hydroxyde de cuivre et le sulfate à base de cuivre tribasique ; (b) un concentré de suspension comprenant du soufre particulaire suspendu dans un milieu aqueux ledit soufre particulaire ayant la distribution de taille de particule $D_{99}$ de 1,2 microns, ledit milieu aqueux comprenant en outre au moins un tensioactif ;
   b) mélanger une deuxième quantité d'eau et au moins un épaississant dans un autre récipient et obtenir un prémélange épaississant ;
   c) mélanger le prémélange épaississant de l'étape (b) avec le mélange de l'étape (a) ; et
   d) filtrer le mélange de l'étape (c).

3. Procédé de traitement d'un locus, ledit procédé comprenant la soumission du locus à un traitement avec une composition comprenant :

   a) un concentré de suspension comprenant du soufre particulaire suspendu dans un milieu aqueux, ledit milieu aqueux comprenant en outre au moins un tensioactif ; dans lequel ledit soufre particulaire a une distribution de taille de particule $D_{99}$ de 1,2 microns ; et
   b) au moins un fongicide multisite de contact, ledit fongicide multisite de contact étant un fongicide à base de cuivre choisi parmi l'oxychlorure de cuivre, le sulfate de cuivre, l'hydroxyde de cuivre et le sulfate de cuivre tribasique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6835719 B
- EP 2695519 A2
- US 2013309327 A1
- WO 2012053894 A2

### Non-patent literature cited in the description

- **AGRIOS, G. N.** Plant Pathology. 208
- Natural Insect and Disease Control. 369
- **OLKOWSKI, W. et al.** *Common Sense Pest Control,* 109
- **BOB EMMETT et al.** *Sulphur formulations, particle size and activity - a review, Strategic Use of Sulphur in integrated pest and disease management (IPM) programs for grapevines,* December 2003, 52-57